# EUROPEAN PATENT SPECIFICATION

(11) **EP 4 553 540 B1**
(45) Date of publication and mention of the grant of the patent: **18.11.2026**
(21) Application number: 23835369.2
(22) Date of filing: 27.06.2023
(51) Int. Cl.: G01S 17/34, G01C 3/06, G01S 7/4912, G01S 7/481

(54) **RANGING DEVICE**
ENTFERNUNGSMESSVORRICHTUNG
DISPOSITIF DE TÉLÉMÉTRIE

(30) Priority: 05.07.2022 JP 2022108448
(43) Date of publication of application: 14.05.2025
(73) Proprietor: Sony Semiconductor Solutions Corporation, Atsugi-shi, Kanagawa 243-0014 (JP)
(72) Inventor: TERADA, Haruhiko, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/023701
(87) International publication number: WO 2024/009836

(56) References cited:
- JP-A- 2000 338 243
- JP-A- 2020 091 432
- JP-A- 2020 148 826
- JP-A- 2022 527 104
- US-A1- 2021 124 024
- US-A1- 2021 349 191

## Description

### [Technical Field]

This disclosure relates to a ranging device.

### [Background Art]

LiDAR (Light Detection and Ranging) is a ranging technology that measures scattered light in response to laser irradiation, and is applied to various applications including autonomous vehicles. Several measurement methods for LiDAR have been proposed, and in particular, a method that uses an optical interferometer to detect the difference frequency between reference light and reception light to measure distance is called coherent LiDAR. In addition, a so-called FMCW (Frequency-Modulated Continuous Wave) LiDAR is a type of coherent LiDAR.

LiDAR optical systems can be classified into a biaxial or bistatic configuration, in which the transmitting and receiving optical systems are independent and the optical axes of the two optical systems do not coincide, and a coaxial or monostatic configuration, in which a single optical system is shared for transmission and reception and the optical axis coincides. The coaxial configuration is generally considered to be suitable for coherent LiDAR because it can be made smaller in size than the biaxial configuration and it is easier to adjust the alignment of the transmitting and receiving systems.
PTL 2 describes a photonic circulator deployed on a chip-scale light-detection and ranging (LiDAR) device with a first thermo-optic phase collocated with a first waveguide, and a second thermo-optic phase shifter collocated with a second waveguide.
PTL 3 describes an FMCW LiDAR transceiver that includes an input port, an optical antenna, an optical switch, a splitter, and a mixer. The optical switch switchably couples the input port to the optical antenna to form an optical path between the input port and the optical antenna. For each optical path directed from the input port to one of the optical antennas, a splitter is coupled along the optical path. The splitter splits the received portion of the laser signal into a local oscillator signal and a transmitted signal, and outputs a return signal that is a portion of the reflected signal. The transmitted signal is emitted via an optical antenna and a reflection of the transmitted signal is received as a reflected signal via the optical antenna. For each splitter, a mixer receives the return signal and the local oscillator signal and mixes the return signal with the local oscillator signal to generate an output signal.
PTL 4 describes a coherent laser radar device provided with a light modulator for modulating one laser beam branched from the laser beams of a CW laser, a light antenna for applying the modulated laser beam to a target as a transmission beam and receiving scattered beam from the target, and a photo detector for performing the heterodyne detection of mixed light where the other of the branch laser beams is mixed with the reception light from the light antenna as a local beam.
PTL 5 describes a semiconductor optical phase modulator that converts single-mode light into multi-mode light, and has a first area where a mirror image is formed due to interference of light and a second area where the power density of the light is lower than that in the first area.

### [Citation List]

### [Patent Literature]

[PTL 1]
   Japanese Translation of PCT Application No. 2021-523386
[PTL 2]
   US Patent Application No. 2021/124024 A1
[PTL 3]
   Japanese Application No. 2022 527104 A
[PTL 4]
   Japanese Application No. 2000 338243 A
[PTL 5]
   Japanese Application No. 2020 148826 A[Non Patent Literature]
[NPL1]
   Yong, Wang, et al. "Four-port cross-shaped circulator based on two-dimensional magneto-photonic crystals." Acta Optica Sinica 34.10.
[NPL2]
   Han, Jae-Hoon, et al. "Efficient low-loss InGaAsP/Si hybrid MOS optical modulator." Nature Photonics 11.8 (2017): 486-490.
[NPL3]
   Lu, Zeqin, et al. "High-performance silicon photonic tri-state switch based on balanced nested Mach-Zehnder interferometer." Scientific reports 7.1 (2017): 1-7.
[NPL4]
   Kim, Younghyun, et al. "Heterogeneously-Integrated Optical Phase Shifters for Next-Generation Modulators and Switches on a Silicon Photonics Platform: A Review." Micromachines 12.6 (2021): 625.

### [Summary]

### [Technical Problem]

According to a first aspect, the present invention provides a ranging device according to independent claim 1. Further aspects of the present invention are set forth in the dependent claims, the drawings and the following description.

However, in a coaxial configuration, an optical power loss occurs when the transmission light is separated to the optical antenna side and the reception light is separated to the photodetector element side.

Therefore, the present disclosure provides a ranging device having a coaxial configuration that can suppress an optical power loss.

### [Solution to Problem]

In order to solve the above problem, the present disclosure provides a ranging device including a laser light source configured to be able to generate transmission light; a reciprocal optical antenna; an photodetector element; and an optical switch configured to optically couple the laser light source, the photodetector element, and the optical antenna in a switchable manner.

The optical switch may be configured to be able to change a first transmission that causes the transmission light to pass toward the optical antenna side and a second transmission that causes the reception light collected by the optical antenna to pass toward the photodetector element side.

The optical switch may change a combination of the first transmission and the second transmission in a time series.

The optical switch may have a first interference-type optical branching element that optically couples the laser light source and the photodetector element; a first optical waveguide having one end connected to the first interference-type optical branching element; a second optical waveguide having one end connected to the first interference-type optical branching element; a second interference-type optical branching element connected to the other end of the first optical waveguide and the other end of the second optical waveguide; and a first phase shifter that shifts a phase of the light passing through the first optical waveguide, and the optical antenna may be optically coupled to the second interference-type optical branching element.

The optical switch may further include a second phase shifter that shifts a phase of light passing through the second optical waveguide.

The optical switch may have a first port connected to a third optical waveguide connected to the laser light source; a second port connected to a fourth optical waveguide connected to the optical antenna; and a third port connected to a fifth optical waveguide connected to one side of a third interference-type optical branching element, the first interference-type optical branching element may be optically coupled to the first port and the third port, the second interference-type optical branching element may be optically coupled to the second port, and the photodetector element may be optically coupled to the other side of the third interference-type optical branching element.

The ranging device may further include a fourth interference-type optical branching element has one side to which a sixth optical waveguide connected to the laser light source is connected, and the fourth interference-type optical branching element may have the other side to which the third optical waveguide and a seventh optical waveguide connected to the third interference-type optical branching element are connected.

The optical switch may further include a fourth port connected to the second interference-type optical branching element, and the seventh optical waveguide connected to the fourth port may be connected to one side of the third interference-type optical branching element.

The optical switch may further include a fourth port connected to the second interference-type optical branching element, and the ranging device may further include a second photodetector element connected to a seventh optical waveguide connected to the fourth port.

The first phase shifter may be a Mach-Zehnder modulator.

At least a part of the laser light source, the photodetector element, the optical antenna, and the optical switch may be configured as a photonic integrated circuit.

The optical antenna may be a grating coupler having a tapered portion spreading in a fan shape and a periodic perturbation structure.

The laser light source may be configured to be able to modulate or change at least one of frequency, phase, polarization, and intensity, and the optical switch may be configured as one of a ring resonator type, a disk resonator type, and a MEMS type.

The optical switch may have, during a measurement period, a first state in which the first transmission is a first value and the second transmission is a second value, and a second state in which the first transmission is smaller than the first value and the second transmission is greater than the second value.

The optical switch may have a first port, a second port, and a third port, and the first port may be connected to the laser source, the second port may be connected to the photodetector element, and the third port may be connected to an optical antenna.

The optical switch may have a fourth port, and the optical switch may cause light emitted from the fourth port to interfere with the reception light collected by the optical antenna as a reference light.

The optical switch may have a fourth port, and the optical switch may connect the fourth port to the photodetector element.

The optical switch may further have, during the measurement period, a third state in which the first transmission is greater than the first value and the second transmission is smaller than the second value.

A state-switching operation of the optical switch may be based on a pseudorandom bit sequence.

The first phase shifter may be a phase shifter that is configured as one of a p-n junction type, a p-i-n junction type, and a SIS capacitor type and utilizes carrier modulation.

### [Brief Description of the Drawings]

[Fig. 1]

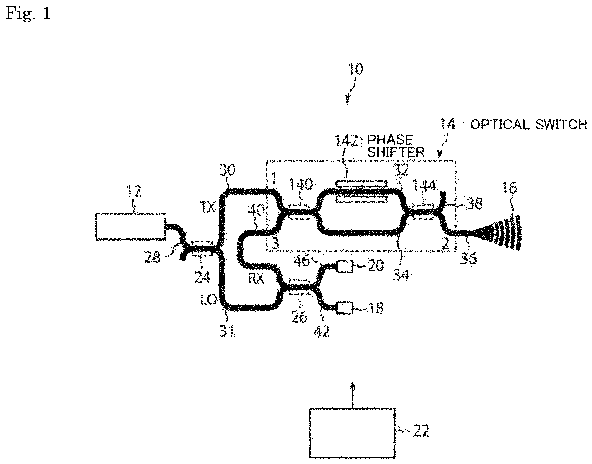

   Fig. 1 is a diagram showing the configuration of a ranging device according to this embodiment.
[Fig. 2A]
   Fig. 2A is a diagram showing an example of a phase shifter according to this application.
[Fig. 2B]

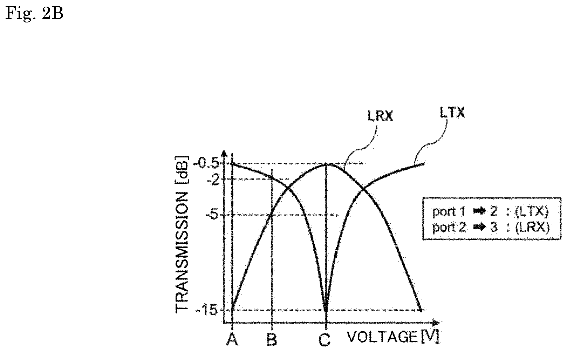

   Fig. 2B is a diagram showing an example of an operating curve of an optical switch.
[Fig. 3]

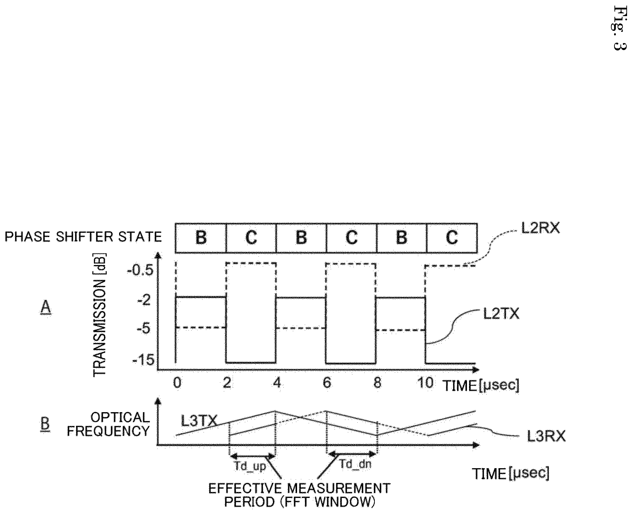

   Fig. 3 is a diagram showing an example of an operation timing chart of a ranging device.
[Fig. 4]

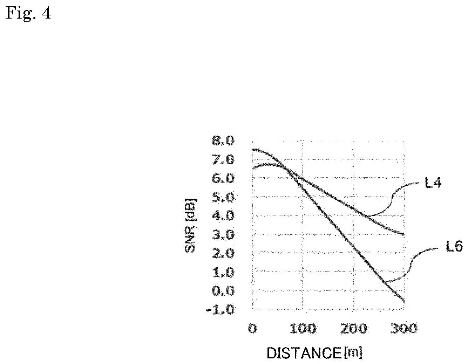

   Fig. 4 is a diagram showing an example of an analytically calculated signal-to-noise ratio of a ranging device.
[Fig. 5]

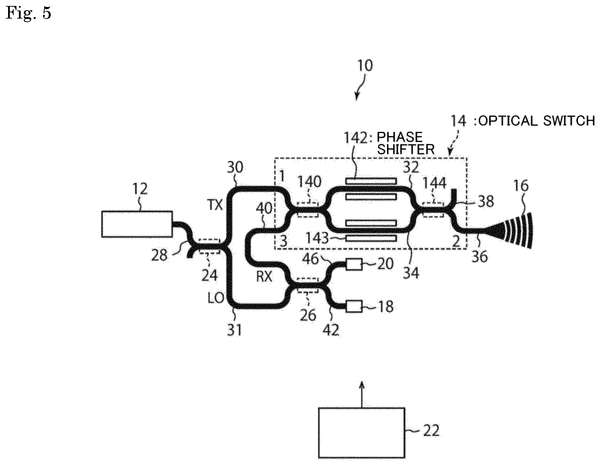

   Fig. 5 is a diagram showing the configuration of a ranging device according to a first modified example of the first embodiment.
[Fig. 6]

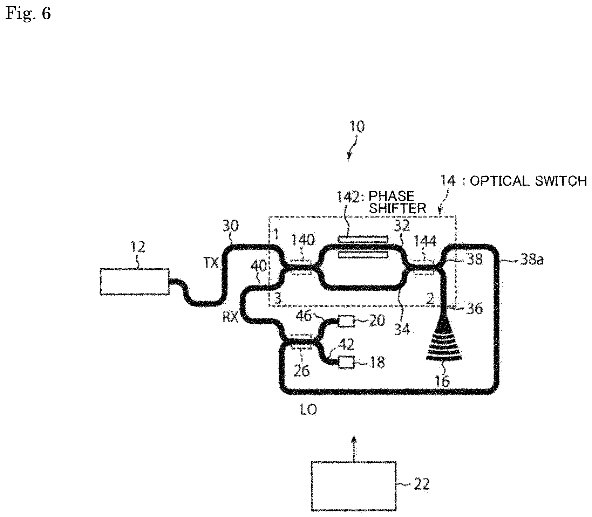

   Fig. 6 is a diagram showing the configuration of a ranging device according to a second modified example of the first embodiment.
[Fig. 7]

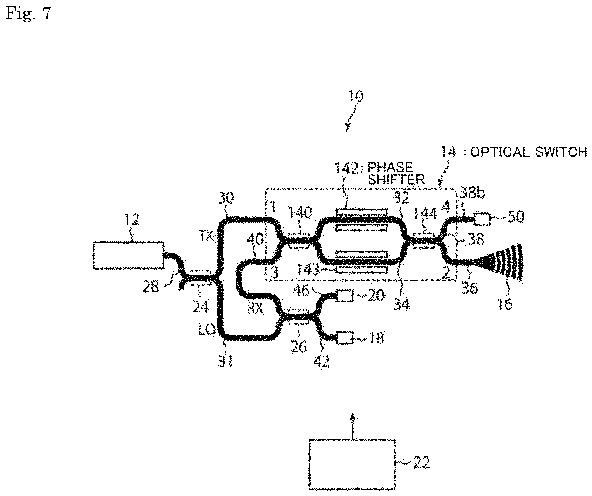

   Fig. 7 is a diagram showing the configuration of a ranging device according to a third modified example of the first embodiment.
[Fig. 8]

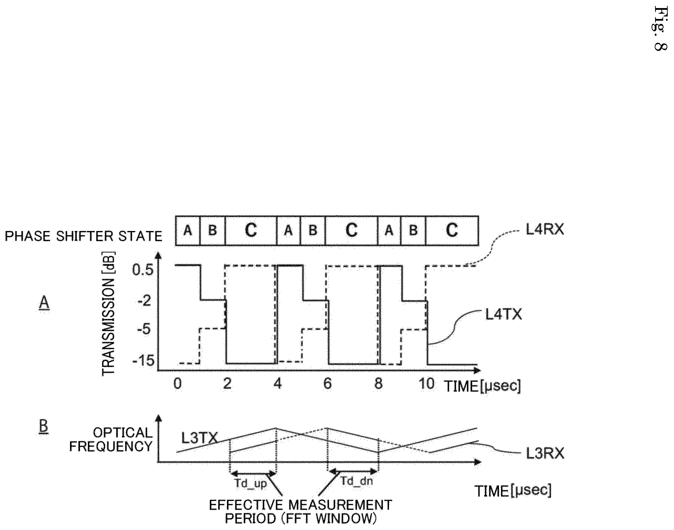

   Fig. 8 is a diagram showing an example of an operation timing chart of a ranging device according to a fourth modified example of the first embodiment.
[Fig. 9]

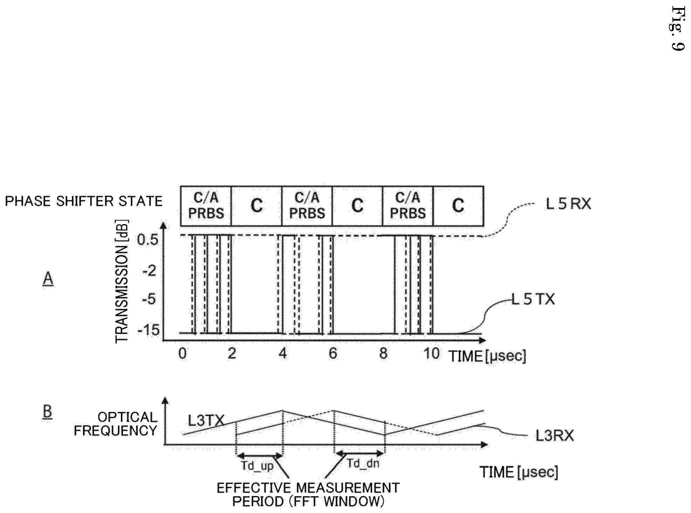

   Fig. 9 is a diagram showing an example of an operation timing chart of a ranging device according to a fifth modified example of the first embodiment.
[Fig. 10]

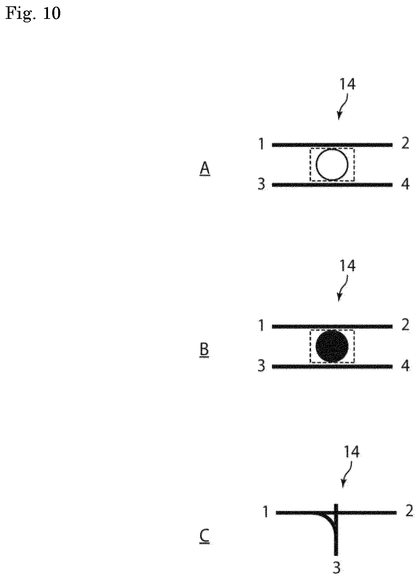

   Fig. 10 is a diagram showing an example of an optical switch of a ranging device according to a sixth modified example of the first embodiment.
[Fig. 11]

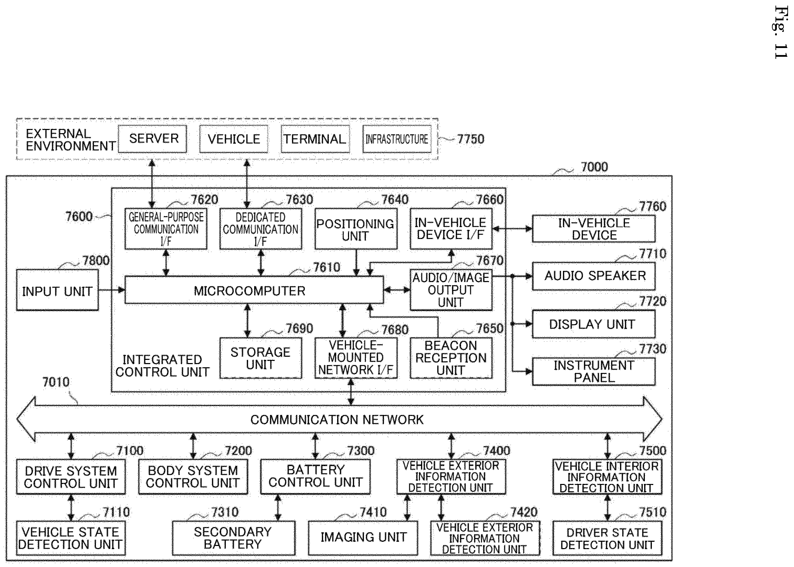

   Fig. 11 is a block diagram illustrating an example of a schematic configuration of a vehicle control system.
[Fig. 12]

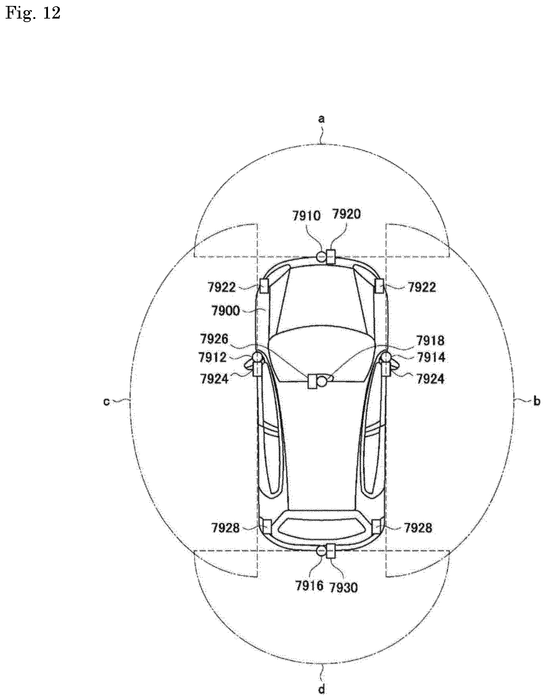

   Fig. 12 is an explanatory diagram showing an example of the installation positions of a vehicle exterior information detecting unit and an imaging unit.

### [Description of Embodiments]

Hereinbelow, an embodiment of a ranging device will be described with reference to the drawings. Hereinbelow, a solid-state imaging element and a ranging device may have components and functions that are not shown or described. The following description does not exclude components or functions that are not illustrated or described.

### (First embodiment)

Fig. 1 is a diagram showing the configuration of a ranging device according to this embodiment. As shown in Fig. 1, the ranging device 10 can be configured as, for example, a photonic integrated circuit (PIC). That is, Fig. 1 shows an example of the layout of the ranging device 10 in a photonic integrated circuit. This ranging device 10 includes a chirped laser 12, an optical switch 14, an optical antenna 16, balanced photodiodes (balanced PDs) 18 and 20, a control processing circuit unit 22, a plurality of interference-type optical branching elements 24 and 26, and optical waveguides 28 to 46. These optical waveguides 28 to 46 are formed as thin wires of Si or silicon nitride (Si3N4 or the like) on a semiconductor substrate. The optical antenna 16 may be configured within the photonic integrated circuit or may be configured outside the photonic integrated circuit. Similarly, the control processing circuit unit 22 may be configured within the photonic integrated circuit or may be configured outside the photonic integrated circuit.

The chirped laser 12 is a laser light source capable of performing a so-called chirp operation in which the optical frequency is raised and lowered with respect to time. The chirped laser 12 emits laser light to the optical waveguide 28. The optical waveguide 28 emits the laser light to the interference-type optical branching element 24.

The interference-type optical branching element 24 splits the power of the laser light entering via the optical waveguide 28 into a transmission light TX and a reference light LO (LO: Local Oscillator). The transmission light TX is guided by the optical waveguide 30 and enters port 1 of the optical switch 14. On the other hand, the reference light LO is guided by the optical waveguide 31 and enters the interference-type optical branching element 26. The optical switch 14 will be described in detail later.

The transmission light TX emitted from port 2 of the optical switch 14 enters the optical antenna 16 via the optical waveguide 36. The optical antenna 36 is, for example, a reciprocal type, and is, for example, a grating coupler (GC) having a tapered portion spreading in a fan shape and a periodic perturbation structure. The optical antenna 36 irradiates a measurement target with the transmission light TX entering from port 2. Note that the reciprocal type in this embodiment means that the transmission light TX can be emitted from the optical antenna 16 and the reception light RX can be collected by the optical antenna 16.

Since the optical antenna 36 is a reciprocal type, it collects the reception light RX reflected from the measurement target and emits it to port 2 of the optical switch 14 via the waveguide 36. This reception light RX is output from port 3 of the switch 14 and enters the optical waveguide 40. The reception light RX guided to the optical waveguide 40 enters the interference-type optical branching element 26. In this way, the optical switch 14 and the optical antenna 36 share a single optical system for the transmission light TX and the reception light RX, and have a coaxial or monostatic configuration in which at least a part of the optical axis coincides.

The reception light RX and the reference light LO entering the interference-type optical branching element 46 interfere with each other inside the interference-type optical branching element 46. The interference light that has interfered inside the interference-type optical branching element 46 is detected by the balanced photodiodes 18 and 20 as an optical signal via the optical waveguides 42 and 46. The balanced photodiodes 18 and 20 convert the optical signal into a current signal and output it to the control processing unit 22. In this way, the optical switch 14 optically couples the chirped laser 12, the optical antenna 36, and the balanced photodiodes 18 and 20 in a switchable manner. The balanced photodiodes 18 and 20 in this embodiment correspond to the photodetector elements.

The control processing unit 22 can electrically communicate with, for example, the chirped laser 12, the optical switch 14, and the balanced photodiodes 18 and 20. The control processing unit 22 can increase and then decrease the frequency of the laser light of the chirped laser 12 in a predetermined time period. The control processing unit 22 also synchronously controls, for example, the chirped laser 12 and the phase shifter 142 of the optical switch 14.

Furthermore, the control processing unit 22 converts the current signals of the balanced photodiodes 18 and 20 into voltage signals. Then, the control processing unit 22 converts the voltage signals into digital signals, detects the frequency components contained in the digital signals by FFT, and calculates the distance to the object and the speed of the object based on the frequency components. That is, the control processing unit 22 can identify the difference frequency by performing spectrum analysis on the output signals of the balanced photodiodes 18 and 20 after AD conversion, and can obtain distance and speed information of the measurement target based on the difference frequency. In this way, the ranging device 10 can measure distances as a ranging device of the FMCW (Frequency-Modulated Continuous Wave) type. In this embodiment, an example of a ranging device of the frequency-modulated continuous wave type is described, but this invention is not limited to this. In other words, in addition to the chirped laser 12, it is also possible to use a laser light source that can modulate or change at least one of the phase, polarization, and intensity.

Here, the optical switch 14 will be described in detail with reference to Fig. 1 and Figs. 2A and 2B. As shown in Fig. 1, the optical switch 14 has an interference-type optical branching element 140, a phase shifter 142, and an interference-type optical branching element 144. The optical waveguide 30 is connected to the interference-type optical branching element 140 via a first port, and the optical waveguide 40 is connected to the interference-type optical branching element 140 via a third port. One end of each of the optical waveguides 32 and 34 is connected to the interference-type optical branching element 140, and the other end of each of the optical waveguides 32 and 34 is connected to the interference-type optical branching element 144.

One end of each of the optical waveguides 36 and 38 is connected to the interference-type optical branching element 144. The other end of the optical waveguide 36 is connected to the optical antenna 16 via port 2, as described above. In addition, the phase shifter 142 is disposed in the optical waveguide 32.

A DAC (Digital-to-Analog Converter) (not shown) controlled by the control processing unit 22 is connected to the phase shifter 142. As a result, the control processing unit 22 controls the phase of the transmission light TX guided by the optical waveguide 32 by the analog voltage signal of the DAC.

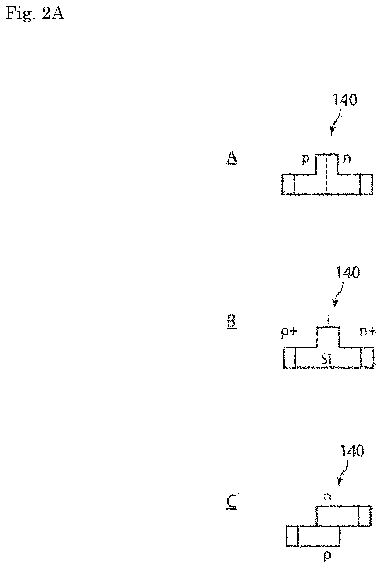

Fig. 2Ais a diagram showing an example of the phase shifter 140 according to this application. Fig. 2A is an example of a p-n junction type phase shifter 140, Fig. 2B is an example of a p-i-n junction type phase shifter 140, and Fig. 2C is an example of a SIS capacitor type phase shifter 140 (see PTL 2 and NPL 4). These phase shifters 140 are, for example, Mach-Zehnder Modulator (MZI) phase shifters mounted on the optical waveguide 32, and use, for example, carrier modulation. In addition, a thermo-optical phase shifter using a heater can also be used for the phase shifter 140.

The Mach-Zehnder Modulator (MZI) phase shifter 140 is a high-speed, low-loss phase shifter using a III-V/Si hybrid structure. Therefore, unlike optical circulators (see NPL 1), the III-V/Si hybrid structure is being mass-produced, and can be manufactured at low cost.

With this configuration, the transmission light TX entering from port 1 is branched into the transmission light TX1 propagating through one optical waveguide 32 and the transmission light TX2 propagating through the other optical waveguide 34. The phase of the transmission light TX1 is shifted by the phase shifter 142. Then, the transmission light TX1 and the transmission light TX2 interfere with each other inside the interference-type optical branching element 144, and the optical output power is distributed to each of the optical waveguides 36 and 38 according to the phase difference between them.

Conversely, the reception light RX collected by the optical antenna 36 and entering from port 2 is branched into the reception light RX1 propagating through one optical waveguide 32 and the reception light RX2 propagating through the other optical waveguide 34. The phase of the transmission light TX1 is shifted by the phase shifter 142. The reception light RX1 and the reception light RX2 interfere with each other inside the interference-type optical branching element 140, and the optical output power is distributed to each of the optical waveguides 30 and 40 according to the phase difference between them.

Fig. 2B is a diagram showing an example of an operating curve of the optical switch 14. The horizontal axis shows the voltage of the analog voltage signal applied to the phase shifter, and the vertical axis shows the transmission in decibels (dB).

The line LTX shows the ratio of the transmission light TX entering from port 1 to the light output from port 2. For example, if the line LTX is -0.5 at the voltage A, which is the operating point A, and the power of the transmission light TX entering from port 1 is set to 1, light with a power of 0.944 is output from port 2.

On the other hand, the line LRX shows the ratio of the reception light RX entering port 2 to light emitted from port 3. For example, if the line LRX is -15 at the voltage A, and the power of the reception light RX entering port 2 is set to 1, light with a power of 0.032 is output from port 3.

Since the line LTX is -2 at the voltage B, which is the operating point B, when the power of the transmission light TX entering from port 1 is set to 1, light with a power of 0.631 is output from port 2. On the other hand, since the line LRX is -5, when the power of the transmission light TX entering from port 2 is set to 1, light with a power of 0.316 is output from port 3.

Since the line LTX is -15 at the voltage C, which is the operating point C, when the power of the transmission light TX entering from port 1 is set to 1, light with a power of 0.032 is output from port 2. On the other hand, since the line LRX is -0.5, when the power of the transmission light TX entering from port 2 is set to 1, light with a power of 0.891 is output from port 3.

That is, at operating point A, the transmission light TX is well transmitted (-0.5 dB), and the reception light RX is almost completely blocked (-15 dB). Conversely, at operating point C, the reception light is well transmitted (-0.5 dB), and the transmission light is blocked (-15 dB). At operating point B, both transmission and reception lights are transmitted with an intermediate loss (-2 or -5 dB).

In this way, the optical switch 14 can switch between a transmission LTX that causes the transmission light TX entering from port 1 to be output from port 2, and a transmission LRX that causes the reception light RX entering from port 2 to be output from port 3. In addition, as shown in Fig. 2B, the transmission LRX tends to decrease when the transmission LTX increases, and the transmission LRX tends to increase when the transmission LTX decreases.

As can be seen from these, the operating characteristics of the optical switch 14 can be changed by changing the voltage applied to the phase shifter 142. In other words, the optical switch 14 can switch the power of the transmission light TX irradiated from the optical antenna 36 and the reception light RX guided to the balanced photodiodes 18 and 20.

Next, an example of control by the control processing unit 22 of the ranging device 10 will be described. Fig. 3 is a diagram showing an example of an operation timing chart of the ranging device 10. A (upper part) of Fig. 3 shows the transmission characteristics of the optical switch 14, and B (lower part) of Fig. 3 shows the increase and decrease operation (chirp profile) of the optical frequency of the chirped laser 12.

The horizontal axis of the graphs of A and B of Fig. 3 indicates a common time, the vertical axis of A of Fig. 3 indicates the transmission, and the vertical axis of B of Fig. 3 indicates the optical frequency of the chirped laser 12. The upper part of the graph of A of Fig. 3 shows the operating point (B or C) of the phase shifter 142 corresponding to Fig. 2. As shown in A of Fig. 3, the operating point of the phase shifter 142 is alternately switched between B, C, B, and C every 2 µsec. That is, the line L2TX indicates the transmission of the transmission light TX entering from port 1 (see Fig. 1) and output from port 2 (see Fig. 1), and the line L2RX indicates the transmission of the reception light RX entering from port 2 and output from port 1.

As shown in B of Fig. 3, the line L3TX indicates an up-down chirp scheme that repeats rising and falling every 4 µsec as an example of the transmission light TX. The line L3RX indicates the frequency of the reception light RX when the measurement target irradiated with the transmission light TX is located at a distance of 300m from the ranging device 10 and receives the reflection of the measurement target.

Since it takes 2 µsec for the laser light to travel 300m in the atmosphere, the waveform of line L3RX is delayed by 2 µsec in the time direction from the waveform of line L3TX. In the time interval of 0 to 2 µsec, the transmission light TX (see Fig. 1) is transmitted by the optical switch 14 at -2 dB and is emitted from the optical antenna 16 to the measurement target 300m away. The reception light RX (see Fig. 1) reflected from the measurement target 300m away travels 300m back and forth. Therefore, the reception light is received by the optical antenna 16 in the time interval of 2 to 4 µsec.

At this time, the reception light RX is transmitted by the optical switch 14 at -0.5 dB and is finally received by the balanced photodiodes 18 and 20. Since the reception loss at this time is minimized (0.5 dB), the total transmission and reception loss is 2.5 dB. As can be seen from this, by switching the operating characteristics of the optical switch 14 in a time series, it is possible to efficiently change the transmission ratio at the transmission timing of the transmission light TX (see Fig. 1) and the transmission ratio at the reception timing of the reception light RX (see Fig. 1).

As described above, in the ranging device 10, which is a coherent LiDAR, the reception light RX (see Fig. 1) is detected by the reference light LO (see Fig. 1). In this embodiment, the chirp profile of the reference light LO is equal to the line L3TX. As can be seen from this, the effective measurement time is the period "Td_up" in the figure during the up chirp (optical frequency rising period), and the period "Td_dn" during the down chirp (optical frequency falling period).

During the effective measurement period, the output signals of the balanced photodiodes 18 and 20 have a difference frequency between the reception light RX and the reference light LO. As described above, the control processing unit 22 can identify the difference frequency by performing spectrum analysis after AD conversion of the output signals from the balanced photodiodes 18 and 20, and obtain the distance and speed information of the target from the difference frequency between the up chirp and the down chirp.

Next, when the distance to the measurement target is 0m, the chirp profile is L3TXa=L3RXa (not shown), Td_up is 0 to 2 µsec, and Td_dn is 4 to 6 psec. The transmission loss remains the same at 2 dB, but the reception loss is 5 dB larger because the phase shifter operating point during reception is B, resulting in a total loss of 7 dB for transmission and reception.

When the distance to the measurement target is 150m, the delay of RX relative to TX is 1 µsec, Td_up is 1 to 3 µsec, and Td_dn is 5 to 7 µsec. The transmission loss remains the same at 2 dB, while the reception loss is divided into half at 5 dB and half at 0.5 dB, resulting in an average reception loss of 2.75 dB, and a total transmission and reception loss of 4.75 dB.

In a similar manner, it is possible to calculate the loss when the distance to the measurement target is 0 to 300m. Fig. 4 is a diagram showing an example of an analytically calculated signal-to-noise ratio (SNR) of the ranging device 10, which is a coherent LiDAR. The vertical axis indicates the signal-to-noise ratio (SNR), and the horizontal axis indicates the distance to the measurement target. Line L4 indicates the signal-to-noise ratio of the ranging device 10 according to this embodiment, and line L6 indicates the signal-to-noise ratio of a ranging device according to a comparative example. The comparative example is, for example, an example in which an optical coupler (see PTL 1) is used instead of the optical switch 14. In other words, the comparative example is an example in which light is always evenly branched. In this way, it can be seen that by using the optical switch 140 according to this embodiment, a better SNR than the comparative example can be obtained when the distance to the measurement target is long, for example, 100 meters or more. On the other hand, it can be seen that, although the SNR is slightly inferior to the comparative example at short distances, an SNR of 6 dB or more is obtained, and this does not pose a problem in practical use.

Note that, in this embodiment, the distance to the main measurement target is described as 300m as an example, but this is not limited to this. For example, it is possible to switch the state of the phase shifter 142 (see Fig. 1) according to the distance to the main measurement target. For example, in an example where the distance to the main measurement target is 600m, the round-trip time (time-of-flight) corresponding to the distance of 600m is 4 µsec, so it is possible to minimize the reception loss by switching the state of the phase shifter 142 at time intervals of 4 µsec.

As described above, the ranging device 10 according to this embodiment includes the optical switch 140 that can change the transmission of the transmission light TX from the chirped laser 12 to the optical antenna 38 side and the transmission of the reception light RX from the optical antenna 38 side to the balanced photodiodes 18 and 20 side according to the measurement time. As a result, it is possible to change the optical power transmission of the transmission light TX and the optical power transmission of the reception light RX, which is the return light from the measurement target of the measurement light TX, according to the distance of the measurement target, and suppress a decrease in the signal-to-noise ratio (SNR) of the ranging device 10 in a predetermined distance range.

### (First modified example of first embodiment)

The ranging device 10 according to the first modified example of the first embodiment differs from the ranging device 10 according to the first embodiment in that a phase shifter 143 is further configured in the optical waveguide 34. The differences from the ranging device 10 according to the first embodiment will be described below.

Fig. 5 is a diagram showing the configuration of a ranging device 10 according to the first modified example of the first embodiment. As shown in Fig. 5, the ranging device 10 according to the first modified example of the first embodiment further includes a phase shifter 143 in the optical waveguide 34. When there is one phase shifter 142, a phase difference of π is required to operate the optical switch 140. In contrast, when two phase shifters 142 are used, the phase shift amount per phase shifter is only π/2, which can contribute to lower voltage and faster switching.

### (Second modified example of first embodiment)

The ranging device 10 according to the second modified example of the first embodiment differs from the ranging device 10 according to the first embodiment in that a part of the output of the optical switch 140 is used as the reference light LO. The differences from the ranging device 10 according to the first embodiment are described below.

Fig. 6 is a diagram showing the configuration of the ranging device 10 according to the second modified example of the first embodiment. As shown in Fig. 6, the optical switch 140 of the ranging device 10 according to the second modified example of the first embodiment further has a fourth port connected to the interference-type optical branching element 144. The optical waveguide 38a connected to the fourth port is connected to the interference-type optical branching element 26.

As a result, a part of the power of the transmission light TX entering port 1 (the optical power that did not pass through port 2) is output to port 4, and this can be used as the reference light LO. Therefore, unlike the ranging device 101 according to the first embodiment, all the optical power of the chirped laser 12 can enter the optical switch 140, and a higher transmission power can be obtained. In addition, it is possible to measure the power of port 4 by monitoring the DC current flowing through the balanced photodiodes 18 and 20. This allows the control processing unit 22 to feed the power back to the voltage control of the phase shifter 142 built into the optical switch 14.

### (Third modified example of first embodiment)

The ranging device 10 according to the third modified example of the first embodiment differs from the ranging device 10 according to the first embodiment in that a part of the output of the optical switch 140 can be detected by the photodetector element 50. The differences from the ranging device 10 according to the first embodiment are described below.

Fig. 7 is a diagram showing the configuration of the ranging device 10 according to the third modified example of the first embodiment. As shown in Fig. 7, the optical switch 140 of the ranging device 10 according to the third modified example of the first embodiment further has a fourth port connected to the interference-type optical branching element 144. The photodetector element 50 is connected to the optical waveguide 38b connected to the fourth port. The photodetector element (Monitor PD) 50 is electrically connected to the control processing unit 22.

In this way, an independent photodetector element 50 is connected to port 4. In the example of the ranging device 10 according to the second modified example of the first embodiment, when monitoring the DC current flowing through the balanced photodiodes 18 and 20, it is affected by the reception light RX entering the balanced photodiodes 18 and 20 from port 3. In contrast, the ranging device 10 according to the third modified example of the first embodiment, as shown in Fig. 7, has an independent photodetector element 50, making it possible to measure the power of port 4 without being affected by the reception light RX. This allows the control processing unit 22 to feed the power back to the voltage control of the phase shifter 142 built into the optical switch 14 with higher accuracy.

### (Fourth modified example of first embodiment)

The ranging device 10 according to the fourth modified example of the first embodiment differs from the ranging device 10 according to the first embodiment in that the phase shifter 142 has three types of state transitions. The differences from the ranging device 10 according to the first embodiment are described below.

Fig. 8 is a diagram showing an example of an operation timing chart of the ranging device 10 according to the fourth modified example of the first embodiment. A (upper part) of Fig. 8 shows the transmission characteristics of the optical switch 14, and B (lower part) of Fig. 8 shows the increase and decrease operation (chirp profile) of the optical frequency of the chirped laser 12. B of Fig. 8 is the same as Fig. 3, so its description is omitted.

The horizontal axis of the graphs of A and B of Fig. 8 indicates a common time, the vertical axis of A of Fig. 8 indicates the transmission, and the vertical axis of B of Fig. 8 indicates the optical frequency of the chirped laser 12. The upper part of the graph of A of Fig. 8 shows the operating points (A, B, C) of the phase shifter 142 corresponding to Fig. 2. As shown in A of Fig. 8, the operating point of the phase shifter 142 is switched between A and B every 1 µsec, and after another 2 µsec, the operating point is changed to C. In this way, the state of the optical switch 14 is repeatedly changed to three states A, B, and C in a time series.

That is, the line L4TX indicates the transmission of the transmission light TX entering port 1 (see Fig. 1) and output from port 2 (see Fig. 1), and the line L4RX indicates the transmission of the reception light RX entering port 2 and output from port 1. Note that the position of the line L4RX is shifted in the drawing to make the drawing easier to see.

In this example, the signal-to-noise ratio (SNR) when the distance to the measurement target is 300m is further improved by 0.75 dB compared to the example of the ranging device 10 according to the first embodiment (Fig. 4). On the other hand, when the distance to the measurement target is within 100m, the performance is worse than that of the example of the ranging device 10 according to the first embodiment (Fig. 4). In this way, when the distance to the measurement target is within a predetermined range, the signal-to-noise ratio (SNR) can be further improved by increasing the number of combinations of states of the optical switch 14 corresponding to the predetermined range.

### (Fifth modified example of first embodiment)

The ranging device 10 according to the fifth modified example of the first embodiment differs from the ranging device 10 according to the first embodiment in that the state transition of the phase shifter 142 is changed at a faster speed. The differences from the ranging device 10 according to the first embodiment are described below.

Fig. 9 is a diagram showing an example of an operation timing chart of the ranging device 10 according to the fifth modified example of the first embodiment. A (upper part) of Fig. 9 shows the transmission characteristics of the optical switch 14, and B (lower part) of Fig. 9 shows the rising and falling operations (chirp profile) of the optical frequency of the chirped laser 12. Since B of Fig. 9 is the same as Fig. 3, the explanation is omitted.

The horizontal axis of the graphs of A and B of Fig. 9 indicates a common time, the vertical axis of A of Fig. 9 indicates the transmission, and the vertical axis of B of Fig. 9 indicates the optical frequency of the chirped laser 12. That is, the line L5TX indicates the transmission of the transmission light TX entering from port 1 (see Fig. 1) and output from port 2 (see Fig. 1), and the line L5RX indicates the transmission of the reception light RX entering from port 2 and output from port 1. Note that the position of the line L5RX is shifted in order to make the drawing easier to see.

The upper part of the graph of A of Fig. 9 indicates the operating point ((C/A PRBS), C) of the phase shifter 142 corresponding to Fig. 2. As shown in A of Fig. 9, the operating points A and C may be switched at high speed as shown in Fig. 9. More specifically, the transmission of the phase shifter 142 can be ON/OFF modulated according to a pseudorandom bit sequence (PRBS) in the time intervals of 0 to 2 µsec, 4 to 6 µsec, and 8 to 10 µsec. Since the transmission light TX is pulsed in this way, it is possible to calculate the autocorrelation function of the reception signal and the transmission signal (pulse train). This makes it possible to estimate the time delay between transmission and reception, and to further improve the ranging accuracy. In this case, the requirement for the switching speed of the optical switch 14 is higher than the switching speed of the optical switch 14 of the ranging device 10 according to the first embodiment.

### (Sixth modified example of first embodiment)

The optical switch 14 of the ranging device 10 according to the sixth modified example of the first embodiment differs from the ranging device 10 according to the first embodiment in that it is configured as one of a ring resonator type, a disk resonator type, and a MEMS type. The differences from the ranging device 10 according to the first embodiment are described below.

Fig. 10 is a diagram showing an example of the optical switch 14 of the ranging device 10 according to the sixth modified example of the first embodiment. The numbers indicate examples of ports. A of Fig. 10 shows an example of the optical switch 14 of the ring resonator type, B of Fig. 10 shows an example of the optical switch 14 of the disk resonator type, and C of Fig. 10 shows an example of the optical switch 14 of the MEMS type (see NPL 4).

The structure of the optical switch 14 of the ring resonator type and the disk resonator type has no carrier response, so the loss is smaller than that of the electro-optic effect, and it is possible to reduce crosstalk. In addition, the structure of the optical switch 14 of the MEMS type does not require a phase shifter, for example, so it is easy to design a large-scale switch array with small crosstalk.

### <<1. Application Examples>>

The technique according to the present disclosure can be applied to various products. For example, the technique according to the present disclosure may be implemented as an apparatus mounted on any kind of mobile body such as an automobile, an electric vehicle, a hybrid electric vehicle, a motorcycle, a bicycle, a personal mobility, an airplane, a drone, a ship, a robot, a construction machine, or an agricultural machine (tractor).

Fig. 11 is a block diagram illustrating a schematic configuration example of a vehicle control system 7000 that is an example of a mobile body control system to which the technique according to the present disclosure is applicable. The vehicle control system 7000 includes a plurality of electronic control units connected via a communication network 7010. In the example illustrated in Fig. 11, the vehicle control system 7000 includes a drive system control unit 7100, a body system control unit 7200, a battery control unit 7300, a vehicle exterior information detection unit 7400, a vehicle interior information detection unit 7500, and an integrated control unit 7600. The communication network 7010 connecting the plurality of control units may be, for example, an in-vehicle communication network compliant with any standards such as CAN (Controller Area Network), LIN (Local Interconnect Network), LAN (Local Area Network), and FlexRay (registered trademark).

Each control unit includes a microcomputer that performs arithmetic processing according to various programs, a storage unit that stores programs executed by the microcomputer, parameters used for various arithmetic operations, and the like, and a drive circuit that drives various control target devices. Each control unit includes a network I/F for performing communication with other control units via the communication network 7010, and includes a communication I/F for performing communication through wired communication or wireless communication with devices, sensors, or the like inside or outside the vehicle. In Fig. 11, a microcomputer 7610, a general-purpose communication I/F 7620, a dedicated communication I/F 7630, a positioning unit 7640, a beacon reception unit 7650, an in-vehicle device I/F 7660, an audio/image output unit 7670, a vehicle-mounted network I/F 7680, and a storage unit 7690 are shown as functional configurations of the integrated control unit 7600. The other control units also include a microcomputer, a communication I/F, a storage unit, and the like.

The drive system control unit 7100 controls the operations of devices related to the drive system of the vehicle according to various programs. For example, the drive system control unit 7100 functions as a control device for a driving force generation device for generating a vehicle driving force of an internal combustion engine or a drive motor, a driving force transmission mechanism for transmitting the driving force to wheels, a steering mechanism for adjusting a steering angle of the vehicle, a braking device that generates a braking force of the vehicle. The drive system control unit 7100 may have a function as a control device, for example, an ABS (Antilock Brake System) or ESC (Electronic Stability Control).

A vehicle state detection unit 7110 is connected to the drive system control unit 7100. The vehicle state detection unit 7110 includes, for example, at least one of a gyro sensor that detects an angular velocity of an axial rotation motion of a vehicle body, an acceleration sensor that detects an acceleration of a vehicle, and sensors for detecting an amount of operation with respect to an accelerator pedal, an amount of operation with respect to a brake pedal, a steering angle of a steering wheel, an engine speed, a rotation speed of wheels, and the like. The drive system control unit 7100 performs arithmetic processing using a signal input from the vehicle state detection unit 7110 to control an internal combustion engine, a drive motor, an electric power steering device, a brake device, and the like.

The body system control unit 7200 controls operations of various devices equipped in the vehicle body in accordance with various programs. For example, the body system control unit 7200 functions as a control device of a keyless entry system, a smart key system, a power window device, or various lamps such as a head lamp, a back lamp, a brake lamp, a turn indicator, and a fog lamp. In this case, radio waves emitted from a portable device in place of a key or signals of various switches can be input to the body system control unit 7200. The body system control unit 7200 receives inputs of radio waves or signals and controls a door lock device, a power window device, and a lamp of the vehicle.

The battery control unit 7300 controls a secondary battery 7310 which is a power supply source of a driving motor in accordance with various programs. For example, information such as a battery temperature, a battery output voltage, or a remaining capacity of a battery is input from a battery device including the secondary battery 7310 to the battery control unit 7300. The battery control unit 7300 performs arithmetic processing using such a signal and performs temperature adjustment control of the secondary battery 7310 or control of a cooling device equipped in the battery device.

The vehicle exterior information detection unit 7400 detects information outside of the vehicle in which the vehicle control system 7000 is mounted. For example, at least one of an imaging unit 7410 and a vehicle exterior information detection unit 7420 is connected to the vehicle exterior information detection unit 7400. The imaging unit 7410 includes at least one of a ToF (Time Of Flight) camera, a stereo camera, a monocular camera, an infrared camera, and other cameras. The vehicle exterior information detection unit 7420 includes at least one of, for example, an environmental sensor detecting present weather or atmospheric phenomena and a surrounding information detection sensor detecting other vehicles, obstacles, pedestrians, and the like around a vehicle on which the vehicle control system 7000 is mounted.

The environmental sensor may be, for example, at least one of a raindrop sensor that detects rain, a fog sensor that detects fog, a sunshine sensor that detects the degree of sunshine, and a snow sensor that detects snowfall. The surrounding information detection sensor may be at least one of an ultrasonic sensor, a radar device, and a LIDAR (Light Detection and Ranging, Laser Imaging Detection and Ranging) device. The imaging unit 7410 and the vehicle exterior information detection unit 7420 may be included as independent sensors or devices or may be included as a device in which a plurality of sensors or devices are integrated.

Here, Fig. 12 illustrates an example of installation positions of the imaging unit 7410 and the vehicle exterior information detection unit 7420. Imaging units 7910, 7912, 7914, 7916, and 7918 are provided, for example, at at least one of a front nose, side mirrors, a rear bumper, a back door, and an upper part of a windshield in a vehicle cabin of the vehicle 7900. The imaging unit 7910 included in the front nose and the imaging unit 7918 included in the upper part of the windshield in the vehicle cabin mainly acquire an image in front of the vehicle 7900. The imaging units 7912 and 7914 included in the side mirrors mainly acquire images of the sides of the vehicle 7900. The imaging unit 7916 included in the rear bumper or the back door mainly acquires an image of the rear of the vehicle 7900. The imaging unit 7918 included in the upper part of the windshield in the vehicle cabin is mainly used for detection of a preceding vehicle, a pedestrian, an obstacle, a traffic light, a traffic sign, a lane, or the like.

In Fig. 12, an example of shooting ranges of the respective imaging units 7910, 7912, 7914, and 7916 is illustrated. An imaging range a indicates an imaging range of the imaging unit 7910 provided on the front nose, imaging ranges b and c indicate imaging ranges of the imaging units 7912 and 7914 provided on the side mirrors, and an imaging range d indicates an imaging range of the imaging unit 7916 provided on the rear bumper or the back door. For example, a bird's-eye view image of the vehicle 7900 as viewed from above can be obtained when the image data captured by the imaging units 7910, 7912, 7914, and 7916 are superimposed.

Vehicle exterior information detection units 7920, 7922, 7924, 7926, 7928, and 7930 provided in a front, a rear, a side, a corner, and an upper part of the windshield in the vehicle cabin of the vehicle 7900 may be, for example, ultrasonic sensors or radar devices. The vehicle exterior information detection units 7920, 7926, and 7930 provided at the front nose, the rear bumper, the back door, and the upper part of the windshield in the vehicle cabin of the vehicle 7900 may be, for example, LIDAR devices. These vehicle exterior information detection units 7920 to 7930 are mainly used for detection of a preceding vehicle, a pedestrian, an obstacle, or the like.

The description will be continued with reference to Fig. 11 again. The vehicle exterior information detection unit 7400 causes the imaging unit 7410 to capture an image of the outside of the vehicle and receives the captured image data. Further, the vehicle exterior information detection unit 7400 receives detection information from the connected vehicle exterior information detection unit 7420. When the vehicle exterior information detection unit 7420 is an ultrasonic sensor, a radar device, or a LIDAR device, the vehicle exterior information detection unit 7400 transmits ultrasonic waves, electromagnetic waves, or the like, and receives information on received reflected waves. The vehicle exterior information detection unit 7400 may perform object detection processing or distance detection processing for a person, a vehicle, an obstacle, a sign, a character on a road surface, or the like on the basis of the received information. The vehicle exterior information detection unit 7400 may perform environment recognition processing for recognizing rainfall, fog, road surface situation, and the like on the basis of the received information. The vehicle exterior information detection unit 7400 may calculate a distance to an object outside the vehicle on the basis of the received information.

Further, the vehicle exterior information detection unit 7400 may perform image recognition processing or distance detection processing for recognizing a person, a vehicle, an obstacle, a sign, a character on a road surface, or the like on the basis of the received image data. The vehicle exterior information detection unit 7400 may perform processing such as distortion correction or alignment on the received image data, and combine image data captured by the different imaging units 7410 to generate a bird's-eye view image or a panoramic image. The vehicle exterior information detection unit 7400 may perform viewpoint conversion processing using the image data captured by the different imaging units 7410.

The vehicle interior information detection unit 7500 detects information inside the vehicle. For example, a driver state detection unit 7510 that detects a driver's state is connected to the vehicle interior information detection unit 7500. The driver state detection unit 7510 may include a camera that images a driver, a biological sensor that detects biological information of the driver, or a microphone that collects a sound in the vehicle cabin. The biological sensor is provided on, for example, a seat surface, a steering wheel, or the like and detects biological information of an occupant sitting on the seat or the driver holding the steering wheel. The vehicle interior information detection unit 7500 may calculate the degree of fatigue or the degree of concentration of the driver or determine whether the driver is drowsing based on detected information input from the driver state detection unit 7510. The vehicle interior information detection unit 7500 may perform a noise cancellation process or the like on a collected sound signal.

The integrated control unit 7600 controls overall operations in the vehicle control system 7000 according to various programs. An input unit 7800 is connected to the integrated control unit 7600. The input unit 7800 is implemented by a device that can be operated for the input by a passenger, for example, a touch panel, a button, a microphone, a switch, or a lever. Data obtained by recognizing voice inputted through a microphone may be inputted to the integrated control unit 7600. The input unit 7800 may be, for example, a remote control device using infrared rays or other radio waves or may be an externally connected device such as a mobile phone or a personal digital assistant (PDA) in response to an operation on the vehicle control system 7000. The input unit 7800 may be, for example, a camera, and in this case, the passenger can input information by gesture. Alternatively, data obtained by detecting a motion of a wearable device worn by the passenger may be input. Further, the input unit 7800 may include, for example, an input control circuit that generates an input signal on the basis of information input by the passenger or the like using the input unit 7800 and outputs the input signal to the integrated control unit 7600. The passenger or the like inputs various types of data to the vehicle control system 7000 or instructs a processing operation by operating the input unit 7800.

The storage unit 7690 may include a ROM (Read Only Memory) that stores various programs to be executed by a microcomputer, and a RAM (Random Access Memory) that stores various parameters, calculation results, or sensor values or the like. The storage unit 7690 may be implemented by, for example, a magnetic storage device such as an HDD (Hard Disc Drive), a semiconductor storage device, an optical storage device, or a magneto-optical storage device.

The general-purpose communication I/F 7620 is a general-purpose communication I/F that mediates communication with various devices present in an external environment 7750. The general-purpose communication I/F 7620 may have, implemented therein, a cellular communication protocol such as global system of mobile (GSM) communications (registered trademark), WiMAX (registered trademark), long term evolution (LTE) (registered trademark), or LTE-Advanced (LTE-A), or other wireless communication protocols such as wireless LAN (also referred to as Wi-Fi (registered trademark)) or Bluetooth (registered trademark). The general-purpose communication I/F 7620 may be connected to, for example, a device (for example, an application server or a control server) present on an external network (for example, the Internet, a cloud network, or a business-specific network) via a base station or an access point. The general-purpose communication I/F 7620 may be connected to terminals (for example, the terminals of the driver, pedestrians, or shops, or machine-type communication (MTC) terminals) near the vehicle by using, for example, the peer-to-peer (P2P) technique.

The dedicated communication I/F 7630 is a communication interface supporting a communication protocol formulated for the purpose of use in a vehicle. The dedicated communication I/F 7630 may implement, for example, a standard protocol such as a wireless access in vehicle environment (WAVE) that is a combination of IEEE802.11p of a lower layer and IEE11609 of an upper layer, a dedicated short range communications (DSRC), or a cellular communication protocol. The dedicated communication I/F 7630 typically performs V2X communications as a concept including one or more of vehicle-to-vehicle communications, vehicle-to-infrastructure communications, vehicle-to-home communications, and vehicle-to-pedestrian communications.

The positioning unit 7640 receives, for example, a GNSS signal from a global navigation satellite system (GNSS) satellite (for example, a GPS signal from a global positioning system (GPS) satellite), executes positioning, and generates position information including a latitude, longitude, and altitude of the vehicle. The positioning unit 7640 may specify a current position by exchanging signals with a wireless access point, or may acquire position information from a terminal such as a mobile phone, PHS, or smartphone having a positioning function.

The beacon reception unit 7650 receives radio waves or electromagnetic waves transmitted from a radio station or the like installed on a road, and acquires information such as a current position, traffic jam, no throughfare, or required time. A function of the beacon reception unit 7650 may be included in the above-described dedicated communication I/F 7630.

The in-vehicle device I/F 7660 is a communication interface that mediates connections between the microcomputer 7610 and various in-vehicle devices 7760 present in the vehicle. The in-vehicle device I/F 7660 may establish a wireless connection using wireless communication protocols such as a wireless LAN, Bluetooth (registered trademark), NFC (Near Field Communication), and WUSB (Wireless USB). Furthermore, the in-vehicle device I/F 7660 may establish a wired connection of, for example, a USB (Universal Serial Bus), HDMI (registered trademark) (High-Definition Multimedia Interface), or MHL (Mobile High-definition Link) via a connection terminal (not illustrated) (and a cable if necessary). The in-vehicle device 7760 may include, for example, at least one of a mobile device or wearable device of an occupant and an information device carried in or attached to the vehicle. Further, the in-vehicle device 7760 may include a navigation device that searches for a route to an arbitrary destination. The in-vehicle device I/F 7660 exchanges control signals or data signals with the in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various programs based on information acquired through at least one of the general-purpose communication I/F 7620, the dedicated communication I/F 7630, the positioning unit 7640, the beacon reception unit 7650, the in-vehicle device I/F 7660, and the vehicle-mounted network I/F 7680. For example, the microcomputer 7610 may calculate control target values for a driving force generation device, a steering mechanism, or a braking device on the basis of acquired information on the inside and outside of the vehicle, and output control commands to the drive system control unit 7100. For example, the microcomputer 7610 may perform cooperative control for the purpose of implementing the functions of ADAS (Advanced Driver Assistance System), the functions including vehicle collision avoidance or impact mitigation, follow-up traveling based on an inter-vehicle distance, vehicle speed maintenance driving, a vehicle collision warning, and a vehicle lane departure warning. The microcomputer 7610 may perform coordinated control to perform automatic driving or the like in which a vehicle travels autonomously regardless of an operation of a driver by controlling a driving force generation device, a steering mechanism, or a braking device, or the like based on acquired surrounding information of the vehicle.

The microcomputer 7610 may generate 3-dimensional distance information between the vehicle and objects such as surrounding structures or people based on information acquired via at least one of the general-purpose communication I/F 7620, the dedicated communication I/F 7630, the positioning unit 7640, the beacon reception unit 7650, the in-vehicle device I/F 7660, and the vehicle-mounted network I/F 7680 and may generate local map information including surrounding information of a present position of the vehicle. The microcomputer 7610 may predict a danger such as collision of the vehicle, approach of a pedestrian, or entry into a traffic prohibition road based on the acquired information and may generate a warning signal. The warning signal may be, for example, a signal for generating a warning sound or turning on a warning lamp.

The audio/image output unit 7670 transmits output signals of at least one of the audio and images to an output device capable of visually or audibly notifying a passenger of the vehicle or the outside of the vehicle of information. In the example of Fig. 11, an audio speaker 7710, a display unit 7720, and an instrument panel 7730 are illustrated as output devices. For example, the display unit 7720 may include at least one of an on-board display and a head-up display. The display unit 7720 may have an augmented reality (AR) display function. The output device may be other devices such as a headphone, a wearable device such as a glasses-type display worn by a passenger, a projector, and a lamp. When the output device is a display device, the display device visually displays results obtained through various processes performed by the microcomputer 7610 or information received from another control unit in various formats such as text, images, tables, and graphs. When the output device is a sound output device, the sound output device converts an audio signal formed by reproduced sound data, acoustic data, or the like into an analog signal and outputs the analog signal auditorily.

In the example illustrated in Fig. 11, at least two control units connected via the communication network 7010 may be integrated as one control unit. Alternatively, each control unit may be configured of a plurality of control units. Further, the vehicle control system 7000 may include another control unit (not illustrated). Further, in the above description, the other control unit may have some or all of functions of any one of the control units. That is, predetermined calculation processing may be performed by any one of the control units as long as information is transmitted and received via the communication network 7010. Similarly, a sensor or device connected to any one of the control units may be connected to the other control unit, and a plurality of control units may transmit or receive detection information to and from each other via the communication network 7010.

In addition, a computer program for realizing each function of the control processing unit 22 according to this embodiment described using Fig. 1 can be implemented in any control unit. Further, it is also possible to provide a computer-readable recording medium in which such a computer program has been stored. The recording medium is, for example, a magnetic disk, an optical disc, a magneto-optical disc, or a flash memory. Further, the above computer program may be distributed via, for example, a network without using the recording medium.

In the vehicle control system 7000 described above, the ranging device 10 according to this embodiment described using Fig. 1 can be applied to the vehicle exterior information detection units 7920, 7926, and 7930 of the application example shown in Fig. 11. For example, the optical power transmission of the transmission light TX in the vehicle exterior information detection units 7920, 7926, and 7930 and the optical power transmission of the reception light RX, which is the return light from the measurement target of the measurement light TX, can be changed according to the distance of the measurement target, and a decrease in the signal-to-noise ratio (SNR) in a predetermined distance range can be suppressed.

### [Reference Signs List]

- 1 to 4: Port
- 10: Ranging device
- 12: Chirped laser
- 14: Optical switch
- 16: Optical antenna
- 18, 20: Balanced photodiode
- 24, 26: Interference-type optical branching element
- 28 to 46: Optical waveguide
- 40: Lens
- 50: Photodetector element
- 140: Interference-type optical branching element
- 142, 143: Phase shifter
- 140: Interference-type optical branching element

## Claims

1. A ranging device (10) comprising:
a laser light source (12) configured to be able to generate transmission light;
a reciprocal optical antenna (16);
a photodetector element (18, 20); and
an optical switch (14) configured to optically couple the laser light source (12), the photodetector element (18, 20), and the optical antenna (16) in a switchable manner;
wherein
the optical switch (14) is configured to be able to change a first transmission that causes the transmission light to pass toward the optical antenna side (16) and a second transmission that causes the reception light collected by the optical antenna (16) to pass toward the photodetector element side (18, 20); and
the optical switch (14) changes a combination of the first transmission and the second transmission in a time series; and
the optical switch (14) includes:
a first interference-type optical branching element (140) that optically couples the laser light source (12) and the photodetector element (18, 20);
a first optical waveguide (32) having one end connected to the first interference-type optical branching element (140);
a second optical waveguide (34) having one end connected to the first interference-type optical branching element (140);
a second interference-type optical branching element (144) connected to the other end of the first optical waveguide (32) and the other end of the second optical waveguide (34); and
the optical antenna (16) is optically coupled to the second interference-type optical branching element (144); wherein
the optical switch includes a single phase shifter (142) configured to shift a phase of the light passing through the first optical waveguide (32), or wherein
the optical switch includes a first phase shifter (142) configured to shift the phase of the light passing through the first optical waveguide (32), a second phase shifter that shifts a phase of light passing through the second optical waveguide and the optical switch (14) further has a fourth port connected to the second interference-type optical branching element (144), and
the ranging device (10) further comprises a second photodetector element (50) connected to a seventh optical waveguide (38) connected to the fourth port.

2. The ranging device (10) according to claim 1, wherein
the optical switch (14) includes:
a first port connected to a third optical waveguide (30) connected to the laser light source (12);
a second port connected to a fourth optical waveguide (36) connected to the optical antenna (16); and
a third port connected to a fifth optical waveguide (40) connected to one side of a third interference-type optical branching element (26),
the first interference-type optical branching element (140) is optically coupled to the first port and the third port,
the second interference-type optical branching element (144) is optically coupled to the second port, and
the photodetector element (18, 20) is optically coupled to the other side of the third interference-type optical branching element (26).

3. The ranging device (10) according to claim 2, whereinthe optical switch (14) further has a fourth port connected to the second interference-type optical branching element (144), and
the seventh optical waveguide (38) connected to the fourth port is connected to one side of the third interference-type optical branching element (26).

4. The ranging device (10) according to claim 2, further comprising
a fourth interference-type optical branching element (24) has one side to which a sixth optical waveguide (28) connected to the laser light source (12) is connected, wherein
the fourth interference-type optical branching element (24) has the other side to which the third optical waveguide (30) and a seventh optical waveguide (38) connected to the third interference-type optical branching element (26) are connected.

5. The ranging device (10) according to claim 1, wherein
the first phase shifter (142) is a Mach-Zehnder modulator phase shifter.

6. The ranging device (10) according to claim 1, wherein
at least a part of the laser light source (12), the photodetector element (18, 20), the optical antenna (16), and the optical switch (14) is configured as a photonic integrated circuit.

7. The ranging device (10) according to claim 1, wherein
the optical antenna (16) is a grating coupler having a tapered portion spreading in a fan shape and a periodic perturbation structure.

8. The ranging device (10) according to claim 1, wherein
the laser light source (12) is configured to be able to modulate or change at least one of frequency, phase, polarization, and intensity, and the optical switch (14) is configured as one of a ring resonator type, a disk resonator type, and a MEMS type.

9. The ranging device (10) according to claim 1, wherein
the optical switch (14) has, during a measurement period, a first state in which the first transmission is a first value and the second transmission is a second value, and a second state in which the first transmission is smaller than the first value and the second transmission is greater than the second value.

10. The ranging device (10) according to claim 1, wherein
the optical switch (14) has a first port, a second port, and a third port, and
the first port is connected to the laser source (12), the second port is connected to the photodetector element (18, 20), and the third port is connected to an optical antenna (16).

11. The ranging device (10) according to claim 10, wherein
the optical switch (14) has a fourth port, and
the optical switch (14) causes light emitted from the fourth port to interfere with the reception light collected by the optical antenna (16) as a reference light.

12. The ranging device (10) according to claim 10, wherein
the optical switch (14) connects the fourth port to the photodetector element (18, 20).

13. The ranging device (10) according to claim 9, wherein
the optical switch (14) further has, during the measurement period, a third state in which the first transmission is greater than the first value and the second transmission is smaller than the second value.

14. The ranging device (10) according to claim 1, wherein
a state-switching operation of the optical switch (14) is based on a pseudorandom bit sequence.

15. The ranging device (10) according to claim 5, wherein
the first phase shifter (142) is a phase shifter that is configured as one of a p-n junction type, a p-i-n junction type, and a SIS capacitor type and utilizes carrier modulation.

## Patentansprüche

1. Entfernungsmessvorrichtung (10), umfassend:
eine Laserlichtquelle (12), die konfiguriert ist, um in der Lage zu sein, Transmissionslicht zu erzeugen;
eine reziproke optische Antenne (16);
ein Fotodetektorelement (18, 20); und
einen optischen Schalter (14), der konfiguriert ist, um die Laserlichtquelle (12), das Fotodetektorelement (18, 20) und die optische Antenne (16) auf eine schaltbare Weise optisch zu koppeln; wobei
der optische Schalter (14) konfiguriert ist, um in der Lage zu sein, eine erste Transmission, die bewirkt, dass das Transmissionslicht in Richtung der Seite der optischen Antenne (16) verläuft, und eine zweite Transmission zu ändern, die bewirkt, dass das Empfangslicht, das durch die optische Antenne (16) gesammelt wird, in Richtung der Seite des Fotodetektorelements (18, 20) durchgelassen wird; und
der optische Schalter (14) eine Kombination der ersten Transmission und der zweiten Transmission in einer Zeitreihe ändert; und
der optische Schalter (14) einschließt:
ein erstes optisches Verzweigungselement (140) von einem Interferenztyp, das die Laserlichtquelle (12) und das Fotodetektorelement (18, 20) optisch koppelt;
einen ersten optischen Wellenleiter (32), der ein Ende aufweist, das mit dem ersten optischen Verzweigungselement (140) von dem Interferenztyp verbunden ist;
einen zweiten optischen Wellenleiter (34), der ein Ende aufweist, das mit dem ersten optischen Verzweigungselement (140) von dem Interferenztyp verbunden ist;
ein zweites optisches Verzweigungselement (144) von dem Interferenztyp, das mit dem anderen Ende des ersten optischen Wellenleiters (32) und dem anderen Ende des zweiten optischen Wellenleiters (34) verbunden ist; und
die optische Antenne (16) an das zweite optische Verzweigungselement (144) von dem Interferenztyp optisch gekoppelt ist; wobei
der optische Schalter einen einzigen Phasenschieber (142) einschließt, der konfiguriert ist, um eine Phase des Lichts zu verschieben, das durch den ersten optischen Wellenleiter (32) verläuft, oder wobei
der optische Schalter einen ersten Phasenschieber (142), der konfiguriert ist, um die Phase des Lichts zu verschieben, das durch den ersten optischen Wellenleiter (32) verläuft, einen zweiten Phasenschieber einschließt, der eine Phase von Licht verschiebt, das durch den zweiten optischen Wellenleiter verläuft, und der optische Schalter (14) ferner einen vierten Anschluss aufweist, der mit dem zweiten optischen Verzweigungselement (144) von dem Interferenztyp verbunden ist, und
die Entfernungsmessvorrichtung (10) ferner ein zweites Fotodetektorelement (50) umfasst, das mit einem siebten optischen Wellenleiter (38) verbunden ist, der mit dem vierten Anschluss verbunden ist.

2. Entfernungsmessvorrichtung (10) nach Anspruch 1, wobei
der optische Schalter (14) einschließt:
einen ersten Anschluss, der mit einem dritten optischen Wellenleiter (30) verbunden ist, der mit der Laserlichtquelle (12) verbunden ist;
einen zweiten Anschluss, der mit einem vierten optischen Wellenleiter (36) verbunden ist, der mit der optischen Antenne (16) verbunden ist; und
einen dritten Anschluss, der mit einem fünften optischen Wellenleiter (40) verbunden ist, der mit einer Seite eines dritten optischen Verzweigungselements (26) von dem Interferenztyp verbunden ist,
das erste optische Verzweigungselement (140) von dem Interferenztyp an den ersten Anschluss und den dritten Anschluss optisch gekoppelt ist,
das zweite optische Verzweigungselement (144) von dem Interferenztyp an den zweiten Anschluss optisch gekoppelt ist, und
das Fotodetektorelement (18, 20) an die andere Seite des dritten optischen Verzweigungselements (26) von dem Interferenztyp optisch gekoppelt ist.

3. Entfernungsmessvorrichtung (10) nach Anspruch 2, wobei der optische Schalter (14) ferner einen vierten Anschluss aufweist, der mit dem zweiten optischen Verzweigungselement (144) von dem Interferenztyp verbunden ist, und
der siebte optische Wellenleiter (38), der mit dem vierten Anschluss verbunden ist, mit einer Seite des dritten optischen Verzweigungselements (26) von dem Interferenztyp verbunden ist.

4. Entfernungsmessvorrichtung (10) nach Anspruch 2, ferner umfassend
ein viertes optisches Verzweigungselement (24) von dem Interferenztyp, das eine Seite aufweist, mit der ein sechster optischer Wellenleiter (28) verbunden ist, der mit der Laserlichtquelle (12) verbunden ist, wobei
das vierte optische Verzweigungselement (24) von dem Interferenztyp die andere Seite aufweist, mit der der dritte optische Wellenleiter (30) und ein siebter optischer Wellenleiter (38) verbunden sind, der mit dem dritten optischen Verzweigungselement (26) von dem Interferenztyp verbunden ist.

5. Entfernungsmessvorrichtung (10) nach Anspruch 1, wobei
der erste Phasenschieber (142) ein Mach-Zehnder-Modulator-Phasenschieber ist.

6. Entfernungsmessvorrichtung (10) nach Anspruch 1, wobei
mindestens ein Teil der Laserlichtquelle (12), des Fotodetektorelements (18, 20), der optischen Antenne (16) und des optischen Schalters (14) als eine fotonisch integrierte Schaltung ausgebildet ist.

7. Entfernungsmessvorrichtung (10) nach Anspruch 1, wobei
die optische Antenne (16) ein Gitterkoppler ist, der einen sich verjüngenden Abschnitt, der sich fächerförmig aufweitet, und eine periodische Interferenzstruktur aufweist.

8. Entfernungsmessvorrichtung (10) nach Anspruch 1, wobei
die Laserlichtquelle (12) konfiguriert ist, um in der Lage zu sein, mindestens eines von Frequenz, Phase, Polarisation und Intensität zu modulieren oder zu ändern, und der optische Schalter (14) als einer von einem Ringresonatortyp, einem Scheibenresonatortyp und einem MEMS-Typ konfiguriert ist.

9. Entfernungsmessvorrichtung (10) nach Anspruch 1, wobei
der optische Schalter (14) während einer Messperiode einen ersten Zustand, in dem die erste Transmission ein erster Wert ist und die zweite Transmission ein zweiter Wert ist, und einen zweiten Zustand aufweist, in dem die erste Transmission kleiner als der erste Wert ist und die zweite Transmission größer als der zweite Wert ist.

10. Entfernungsmessvorrichtung (10) nach Anspruch 1, wobei
der optische Schalter (14) einen ersten Anschluss, einen zweiten Anschluss und einen dritten Anschluss aufweist, und
der erste Anschluss mit der Laserquelle (12) verbunden ist, der zweite Anschluss mit dem Fotodetektorelement (18, 20) verbunden ist und der dritte Anschluss mit einer optischen Antenne (16) verbunden ist.

11. Entfernungsmessvorrichtung (10) nach Anspruch 10, wobei
der optische Schalter (14) einen vierten Anschluss aufweist, und
der optische Schalter (14) bewirkt, dass Licht, das aus dem vierten Anschluss emittiert wird, als Referenzlicht mit dem Empfangslicht interferiert, das durch die optische Antenne (16) gesammelt wird.

12. Entfernungsmessvorrichtung (10) nach Anspruch 10, wobei
der optische Schalter (14) den vierten Anschluss mit dem Fotodetektorelement (18, 20) verbindet.

13. Entfernungsmessvorrichtung (10) nach Anspruch 9, wobei
der optische Schalter (14) ferner während der Messperiode einen dritten Zustand aufweist, in dem die erste Transmission größer als der erste Wert ist und die zweite Transmission kleiner als der zweite Wert ist.

14. Entfernungsmessvorrichtung (10) nach Anspruch 1, wobei
ein Zustandsschaltvorgang des optischen Schalters (14) auf einer Pseudozufallsbitfolge basiert.

15. Entfernungsmessvorrichtung (10) nach Anspruch 5, wobei
der erste Phasenschieber (142) ein Phasenschieber ist, der als einer von einem p-n-Übergangstyp, einem p-i-n-Übergangstyp und einem SIS-Kondensatortyp konfiguriert ist und Trägermodulation verwendet.

## Revendications

1. Dispositif de télémétrie (10) comprenant :
une source de lumière laser (12) configurée pour pouvoir générer une lumière de transmission ;
une antenne optique réciproque (16) ;
un élément photodétecteur (18, 20) ; et
un commutateur optique (14) configuré pour coupler optiquement la source de lumière laser (12), l'élément photodétecteur (18, 20), et l'antenne optique (16) de manière commutable ; dans lequel
le commutateur optique (14) est configuré pour pouvoir modifier une première transmission qui fait passer la lumière de transmission vers le côté antenne optique (16) et une seconde transmission qui fait passer la lumière de réception collectée par l'antenne optique (16) vers le côté élément photodétecteur (18, 20) ; et
le commutateur optique (14) modifie une combinaison de la première transmission et de la seconde transmission dans une série temporelle ; et
le commutateur optique (14) comporte :
un premier élément de dérivation optique de type à interférence (140) qui couple optiquement la source de lumière laser (12) et l'élément photodétecteur (18, 20) ;
un premier guide d'ondes optique (32) ayant une extrémité connectée au premier élément de dérivation optique de type à interférence (140) ;
un deuxième guide d'ondes optique (34) ayant une extrémité connectée au premier élément de dérivation optique de type à interférence (140) ;
un deuxième élément de dérivation optique de type à interférence (144) connecté à l'autre extrémité du premier guide d'ondes optique (32) et à l'autre extrémité du deuxième guide d'ondes optique (34) ; et
l'antenne optique (16) est couplée optiquement au deuxième élément de dérivation optique de type à interférence (144) ; dans lequel
le commutateur optique comporte un unique déphaseur (142) configuré pour déphaser la lumière traversant le premier guide d'ondes optique (32), ou dans lequel
le commutateur optique comporte un premier déphaseur (142) configuré pour déphaser la lumière traversant le premier guide d'ondes optique (32), un second déphaseur qui déphase de la lumière traversant le deuxième guide d'ondes optique et le commutateur optique (14) a en outre un quatrième port connecté au deuxième élément de dérivation optique de type à interférence (144), et
le dispositif de télémétrie (10) comprend en outre un second élément photodétecteur (50) connecté à un septième guide d'ondes optique (38) connecté au quatrième port.

2. Dispositif de télémétrie (10) selon la revendication 1, dans lequel
le commutateur optique (14) comporte :
un premier port connecté à un troisième guide d'ondes optique (30) connecté à la source de lumière laser (12) ;
un deuxième port connecté à un quatrième guide d'ondes optique (36) connecté à l'antenne optique (16) ; et
un troisième port connecté à un cinquième guide d'ondes optique (40) connecté à un côté d'un troisième élément de dérivation optique de type à interférence (26),
le premier élément de dérivation optique de type à interférence (140) est couplé optiquement au premier port et au troisième port,
le deuxième élément de dérivation optique de type à interférence (144) est couplé optiquement au deuxième port, et
l'élément photodétecteur (18, 20) est couplé optiquement à l'autre côté du troisième élément de dérivation optique de type à interférence (26).

3. Dispositif de télémétrie (10) selon la revendication 2, dans lequel le commutateur optique (14) a en outre un quatrième port connecté au deuxième élément de dérivation optique de type à interférence (144), et
le septième guide d'ondes optique (38) connecté au quatrième port est connecté à un côté du troisième élément de dérivation optique de type à interférence (26).

4. Dispositif de télémétrie (10) selon la revendication 2, comprenant en outre
un quatrième élément de dérivation optique de type à interférence (24) ayant un côté auquel un sixième guide d'ondes optique (28) connecté à la source de lumière laser (12) est connecté, dans lequel
le quatrième élément de dérivation optique de type à interférence (24) ayant l'autre côté auquel le troisième guide d'ondes optique (30) et un septième guide d'ondes optique (38) connecté au troisième élément de dérivation optique de type à interférence (26) sont connectés.

5. Dispositif de télémétrie (10) selon la revendication 1, dans lequel
le premier déphaseur (142) est un déphaseur de modulateur Mach-Zehnder.

6. Dispositif de télémétrie (10) selon la revendication 1, dans lequel
au moins une partie de la source de lumière laser (12), de l'élément photodétecteur (18, 20), de l'antenne optique (16), et du commutateur optique (14) est configurée comme un circuit intégré photonique.

7. Dispositif de télémétrie (10) selon la revendication 1, dans lequel
l'antenne optique (16) est un coupleur à réseau ayant une partie effilée s'évasant en forme d'éventail et une structure de perturbation périodique.

8. Dispositif de télémétrie (10) selon la revendication 1, dans lequel
la source de lumière laser (12) est configurée pour pouvoir moduler ou modifier au moins l'une parmi la fréquence, la phase, la polarisation, et l'intensité, et le commutateur optique (14) est configuré comme l'un parmi un type à résonateur en anneau, un type à résonateur en disque, et un type MEMS.

9. Dispositif de télémétrie (10) selon la revendication 1, dans lequel
le commutateur optique (14) a, pendant un laps de temps de mesure, un premier état dans lequel la première transmission est une première valeur et la seconde transmission est une seconde valeur, et un second état dans lequel la première transmission est inférieure à la première valeur et la seconde transmission est supérieure à la seconde valeur.

10. Dispositif de télémétrie (10) selon la revendication 1, dans lequel
le commutateur optique (14) a un premier port, un deuxième port, et un troisième port, et
le premier port est connecté à la source laser (12), le deuxième port est connecté à l'élément photodétecteur (18, 20), et le troisième port est connecté à une antenne optique (16).

11. Dispositif de télémétrie (10) selon la revendication 10, dans lequel
le commutateur optique (14) a un quatrième port, et
le commutateur optique (14) fait interférer la lumière émise par le quatrième port avec la lumière de réception collectée par l'antenne optique (16) comme lumière de référence.

12. Dispositif de télémétrie (10) selon la revendication 10, dans lequel
le commutateur optique (14) connecte le quatrième port à l'élément photodétecteur (18, 20).

13. Dispositif de télémétrie (10) selon la revendication 9, dans lequel
le commutateur optique (14) a en outre, pendant le laps de temps de mesure, un troisième état dans lequel la première transmission est supérieure à la première valeur et la seconde transmission est inférieure à la seconde valeur.

14. Dispositif de télémétrie (10) selon la revendication 1, dans lequel
une opération de commutation d'état du commutateur optique (14) est basée sur une séquence de bits pseudo-aléatoire.

15. Dispositif de télémétrie (10) selon la revendication 5, dans lequel
le premier déphaseur (142) est un déphaseur qui est configuré comme l'un parmi un type à jonction p-n, un type à jonction p-i-n, et un type à condensateur SIS et utilise une modulation de porteuse.
